# EUROPEAN PATENT SPECIFICATION

(11) **EP 0 626 406 B1**
(45) Date of publication and mention of the grant of the patent: **31.10.2001**
(21) Application number: 94201042.2
(22) Date of filing: 15.04.1994
(51) Int. Cl.: C08G 63/84

(54) **Process for preparing thermoplastic polyesters possessing high stability in the molten state**
Verfahren zur Herstellung von thermoplastischen Polyestern mit hoher Schmelzstabilität
Procédé de préparation de polyesters thermoplastiques ayant une haute stabilité en état de fusion

(30) Priority: 24.05.1993 IT MI931068
(43) Date of publication of application: 30.11.1994
(73) Proprietor: P.Group S.r.L., 20129 Milan (IT)
(72) Inventor: Nadali, Giampietro, I-30033 Noale (Venezia) (IT); Tartari, Vittorio, I-31100 Treviso (IT); Ignatov, Vladimir, I-30172 Mestre (Venezia) (IT); Bonora, Virna, I-40057 Granarolo dell'Emilia (Bologna) (IT); Fiorini, Maurizio, I-40053 Bazzano (Bologna) (IT)
(74) Representative: Fusina, Gerolamo

(56) References cited:
- FR-A- 1 567 382
- CHEMICAL ABSTRACTS, vol. 92, no. 26, 30 June 1980, Columbus, Ohio, US; abstract no. 216666, RUZEK, IVO ET AL. 'Fiber-forming polyesters' & CS-A-181 052 (CZECH.) 15 January 1980
- CHEMICAL ABSTRACTS, vol. 81, no. 6, 12 August 1974, Columbus, Ohio, US; abstract no. 26260, OHZEKI TAKAO, ET AL. 'Polyester' & JP-B-48 031 995 (MITSUBISHI RAYON) 3 October 1973
- CHEMICAL ABSTRACTS, vol. 81, no. 6, 12 August 1974, Columbus, Ohio, US; abstract no. 26263, OHZEKI, TAKAO ET AL. 'Polyesters' & JP-B-48 032 192 (MITSUBISHI RAYON) 4 October 1973
- CHEMICAL ABSTRACTS, vol. 81, no. 6, 12 August 1974, Columbus, Ohio, US; abstract no. 26259, OHZEKI, TAKAO ET AL. 'Polyester' & JP-B-48 031 994 (MITSUBISHI RAYON) 3 October 1973
- CHEMICAL ABSTRACTS, vol. 81, no. 6, 12 August 1974, Columbus, Ohio, US; abstract no. 26262, OHZEKI, TAKAO ET AL. 'Polyesters' & JP-B-48 031 996 (MITSUBISHI RAYON) 3 October 1973

## Description

This invention relates to a process for the production of thermoplastic polyesters possessing high stability in the molten state.

In particular, the invention relates to a process for the production of thermoplastic polyesters containing essentially units derived from an aromatic dicarboxylic acid alternating with units derived from a diol, said process being based on the formation of ester groups by condensation or transesterification.

Thermoplastic aromatic polyesters, and in particular polyethyleneterephthalate (PET) are widely used polymers, employed generally for producing fibres, sheets, plates or formed articles such as containers, components etc. possessing excellent mechanical characteristics.

These finished products are generally prepared by molten polyester processing methods such as extrusion, moulding, blow-moulding, thermoforming etc., all of which involve exposing the polymer to high temperature, usually exceeding 200°C, for a period of at least a few minutes but in certain cases more than 10-20 minutes.

It is also frequently the case that a polyester needs to be processed several times under molten conditions to obtain the finished product.

Because of the high temperature, especially under conditions of considerable mechanical stress as occurs during extrusion or injection moulding, the polyester undergoes degradation leading to lowering of the average molecular weight, an uncontrollable linearity reduction, and decoloration and brittling of the polymer after solidification.

A second degradation occurs during the preparation of the polyester, when it is maintained at a temperature exceeding 200°C during bulk polymerization.

To overcome the drawbacks due to thermal degradation of PET and other thermoplastic polyesters numerous studies have been carried out and various solutions have been proposed in the literature.

In particular, the role of acid or basic impurities deriving from the catalyst used for their preparation in favouring polyester thermal degradation has been recognized.

As is widely known and described for example in "Comprehensive Polymer Science", Ed. G.C. Eastmond et al., Pergamon Press, Oxford 1989, vol. 5, pp. 275-315, thermoplastic polyesters can be prepared in various ways, all comprising a condensation reaction with the formation of ester groups. In particular, aromatic polyesters are usually prepared by reacting a diol with an aromatic dicarboxylic acid or a derivative thereof esterified with a volatile alcohol such as methanol or ethanol.

The preparation process is conducted in two stages, in the first of which the diacid or the esterified derivative is reacted with an excess of the diol, the water or alcohol formed during the reaction being removed. In the second stage, which is conducted at a temperature exceeding 200°C under vacuum, the excess diol is removed with formation of the polyester. The catalysts used both in the first and in the second stage are preferably of acid type and can perform their catalytic function either in a single stage or in both, according to their type. Catalysts particularly used for the industrial production of polyesters include for example sulphuric acid, lead, calcium, zinc or manganese acetates, titanium alkoxides, germanium and antimony oxides, these latter especially for the second polymerization stage. Further details, both on the different methods for preparing thermoplastic aromatic polyesters and on the different catalysts used are given in the aforesaid publication "Comprehensive Polymer Science". However, based on the experience of the present applicant, these catalysts still do not ensure a sufficient thermal stability of such polymers as to enable them to be used in the more sophisticated working processes or for the production of very high quality articles.

Thermoplastic polyester production processes using certain lanthanum, cerium or neodymium compounds as catalyst are also known in the literature.

In particular, US patent 3,489,722 describes a process for preparing polyethyleneterephthalate (PET) with a reduced degree of yellowing, in which Ce or La salts such as acetates, nitrates or chlorides in combination with an organic phosphite or phosphate are used as catalyst.

US patent 3,118,861 reports the use of neodymium oxide as catalyst in the preparation of high purity PET.

However, in said processes the catalytic system is insufficiently active to attain the high productivity level, for equal molecular weights, which is currently required by the world polyester market.

FR-A-1567382 relates to a process for producing polyesters from an aromatic dicarboxylic acid (or an ester thereof) and a diol, said process consisting of two steps: a first step concern the transesterification reaction between the dicarboxylic acid ester and the diol, leading to the formation of bis(hydroxyethyl)terephthalate, followed by the polycondensation reaction at high temperature and under reduced pressure. The use of samarium inorganic and organic salts , as catalysts, is disclosed.

Consequently notwithstanding the considerable literature existing in this field, the known processes for preparing PET or other thermoplastic aromatic polyesters are still not completely satisfactory for many technologies in which such polymers could find potential use. This is particularly critical in those working procedures in which PET is used in mixture with other polymers.

Particularly complicated in this sense is the situation which arises when such polyesters are mixed with polymers containing groups able to interact chemically with the ester groups, such as amides or carbonates. In this respect, it happens in these cases that the uncontrolled progress of these interactions leads to a progressive loss of the advantageous synergic properties characteristic of the mixture.

It has now been found that said drawbacks can be globally and surprisingly overcome using the aromatic polyesters obtained by the process according to the present invention. In particular, these polyesters have a high average molecular weight, can be worked by usual transformation processes without undergoing extensive degradation or yellowing, and also show excellent stability in mixture with other polymers obtained by polycondensation reactions.

Consequently the present invention provides a process for preparing high temperature-stable thermoplastic polyesters by polycondensation in the presence of particular catalysts able to reduce the extent of degradation in the molten polyester.

In particular, the present invention provides a process for preparing a thermoplastic aromatic polyester comprising:
a) reacting an aromatic dicarboxylic acid, or a derivative thereof esterified with a volatile alcohol, with an excess of a diol, while at the same time removing the water or volatile alcohol which forms during the reaction, until substantially the dicarboxylic acid diglycolester or a mixture of oligomers thereof is obtained;
b) polycondensing the dicarboxylic acid diglycolester or the mixture of oligomers obtained in stage a) while at the same time removing the excess glycol released during the polycondensation, until the thermoplastic aromatic polyester is obtained; wherein in stage b) or preferably in both stages a) and b) of the process a salt or a saline complex, soluble in the reacting mixture, of a metal chosen from gadolinium, erbium, thulium, ytterbium and lutetium is used as catalyst.

More specifically, this metal is chosen from gadolinium, and erbium.

The process of the present invention enables polyesters to be prepared with surprisingly high thermal and chemical stability starting from dicarboxylic acids and diols commonly used for preparing polyesters of the known art.

Aromatic dicarboxylic acids usable in stage a) of the present invention are generally those compounds of general formula:

HOOC-Ar-COOH (I)

in which the symbol Ar represents a C₆-C₂₀ divalent aromatic residue and can for example be ortho-, para- or meta-phenylene, methyl phenylene, chlorophenylene, dimethylphenylene, phenylenedimethylene, diphenylene, methanediphenylene, 2,2-propanediphenylene, diphenyleneether, diphenylenesulphone, naphthalene, anthracene and the like.

Ar can also be a heteroaromatic divalent residue such as pyridine, thiophene, furan and the corresponding alkyl or halosubstituted nuclei.

Preferred dicarboxylic acids for the purposes of the present invention are phthalic acids and naphthalene-dicarboxylic acids. Terephthalic acid is particularly preferred.

The term "aromatic dicarboxylic acids" as used in the present invention also comprises mixtures of two or more of the dicarboxylic acids of formula (I) and also mixtures of one or more of such dicarboxylic acids with up to 20 mol%, and preferably up to 10 mol%, of an aliphatic dicarboxylic acid such as succinic acid or adipic acid. The term "aromatic dicarboxylic acids" also includes mixtures of said compounds with up to 20 mol%, and preferably up to 10 mol%, of hydroxyaromatic derivatives such as meta and parahydroxybenzoic acids, hydroxynaphthoic acids and 2-hydroxyethylbenzoic acid.

In the process of the present invention those derivatives of said dicarboxylic acids in which one or both the carboxyl groups are esterified with a volatile alcohol can also be used. Diesters obtained by esterifying carboxylic acids with alcohols which are volatile or in any event easily removable by evaporation during the course of stage a) of the present process are particularly useful for preparing the polyesters of the present invention.

Typical aromatic dicarboxylic acid derivatives suitable for use in the present invention are C₁-C₅ aliphatic alcohol diesters such as dimethylesters, diethylesters and dibutylesters of the acids of formula (I).

For the present invention it is preferable to conduct stage a) starting from diesters rather than from the free acids.

Dimethylesters, and in particular dimethylterephthalate, are particularly preferred.

Diols suitable for preparing the polyesters of the present invention include all the usual compounds with 2 hydroxyl groups per molecule generally used for preparing polyesters of the known art.

These compounds are also usually known as glycols and enable linear polyesters to be obtained.

Diols usable for the present invention include for example aliphatic glycols of general formula:

HO-(CH₂)ₙOH

in which n is a whole number between 1 and 10.

Typical dioles include diethyleneglycol, triethyleneglycol, tetramethyleneglycol, hexamethyleneglycol, decamethyleneglycol, neopentylglycol, 1,4-cyclohexanediol and 1,4-dimethylolcyclohexane.

The term "diols" as used in the present invention also includes mixtures of glycols with smaller quantities, generally up to 10 wt% on the glycol, of triols or polyols of higher functionality if branched thermoplastic polyesters are required.

Finally usable for the present invention, preferably in mixture with one or more of the previously mentioned diols, are those diols or polyols obtained by oligomerization or polymerization of glycols such as diethyleneglycol or propyleneglycol, or olefinic oxides such as ethylene oxide or propylene oxide. These diols or polyols are generally characterised by sequences of repetitive units with the following structure (II):

--(O-CH₂-CHR-)ₘ-- (II)

in which R is hydrogen or methyl and m is a whole number between 2 and 500, and preferably between 2 and 300.

The soluble salts or saline complexes of gadolinium or erbium usable as catalyst in the process of the present invention are inorganic or preferably organic salts which are soluble in the reaction mixture of stage b) and preferably of stage a), at least in a quantity sufficient to effect catalysis.

Inorganic salts suitable for the present invention are compounds of general formula:

MXₚL_{q} (III)

in which M is a metal chosen from gadolinium, erbium, thulium, ytterbium and lutetium, X is a monovalent inorganic counter-ion such as chlorine, bromine or fluorine, nitrate, nitrite, hydrogensulphate or the like, each of the q Ls is independently a neutral ligand and p is the oxidation state of the metal M, which can assume the value 2 or 3 with the condition that p+q is a maximum of 8 and preferably a whole number between 2 and 6.

Other compounds usable as catalysts for the process of the present invention are organic salts of the following formula (IV):

MYₚL_{q} (IV)

in which each of the p Ys represents independently a monodentate organic anion and M, L, p and q have the same meaning as in formula (III), on condition that p+q is a maximum of 8 and preferably a whole number between 2 and 6.

Y can be an anion deriving from an aliphatic, cycloaliphatic or aromatic carboxylic acid, or an anion deriving from a sulphonic, sulphinic, phosphonic or phosphinic acid, or an alkoxide, aryloxide or carbamate anion.

Yₙ can also be an anion of a dicarboxylic acid such as isophthalic, oxalic or malonic acid, or if p = 3 can represent the combination of a dicarboxylate with a monofunctional anion.

Typical examples of Y deriving from carboxylic or dicarboxylic acids included within the scope of the present invention include formate, acetate, chloroacetate, propionate, butyrate, hexanoate, decanoate, palmitate, stearate, cyclohexanoate, benzoate, chlorobenzoate, hydroxybenzoate, toluate, ethylbenzoate, octylbenzoate, 4-phenylbenzoate, naphthoate, 2-furancarboxylate, isophthalate, malonate, adipate and similar anions. Other examples of anions included within the meaning of Y are phenate, 2,6-dimethylphenate, methoxide, ethoxide, propoxide, isopropoxide, butoxide, ethylcarbamate, phenylcarbamate, benzenesulphonate, benzenephosphonate and the like.

Those preferred for the purposes of the present invention are benzoate, acetate, propionate, phenate, 2,6-dimethylphenate, propoxide, isopropoxide and butoxide ions.

Neutral L ligands present as coordinators of the samarium or europium in the catalysts of the present invention are all those generally known to the expert in the metallorganic chemistry of such metals. In addition to H₂O and NH₃, which are the most common inorganic neutral ligands, the present invention includes those organic ligands consisting of non-ionic molecules containing at least one heteroatom such as N, P, O or S, with N preferred, which has at least one electronic doublet available for coordination. These ligands act as coordinators for the metal M by means of the basic Lewis centres situated on the heteroatoms. Substantially all the different classes of organic neutral ligands of the known art which can form stable complexes with one of the aforedefined metals M can be used for the purposes of the present invention. A large number of such ligands are reported in the publication "Gmelin Handbuch der Anorganischen Chemie, Coordination Compounds of Sc, Y, La to Lu", volumes D1-D4, 8th edition, Springer Verlag, Berlin (1980-1986), which forms an integral part of the present patent application as reference. Preferred ligands for preparing the catalysts of the present invention are bi- or polydentate ligands characterised by two or more heteroatoms of the group N, P, O and S, situated in positions such as to coordinate with the same metal atom M. Typical examples of these ligands, which however do not represent any limitation to the present invention, are β-diketones or β-ketoesters such as acetylacetone or methyl acetylacetate,o-dipyridyl, 8-hydroxy-quinoline or crown ethers such as the compounds known as benzo-12-crown-4 and benzo-16-crown-5.

In the case of complexes in which at least one polydentate ligand is present, the symbol q in formulas (III) and (IV) represents the number of ligands and is less than the number of coordinating atoms.

Other compounds suitable for the purposes of the present invention are complexes of the aforedefined lanthanides M with one or more di- or polydentate anionic ligands.

Of these, those complexes of general formula (V):

BᵢMLⱼ (V)

are preferred in which M and L have the aforesaid meaning, is a bidentate anionic ligand, and i is the oxidation state of the metal, with the condition that 2i + j is a whole number between 4 and 8 and preferably between 6 and 8.

The bidentate anionic ligands B of the present invention are those organic anions able to coordinate with the metal M in such a manner as to form cyclic structures generally having 5 to 7 atoms in the cycle, including the metal M.

Typical but not limiting examples of bidentate anionic ligands usable for forming the complexes of general formula (V) are salicylates and acylsalicylates such as acetylsalicylate, β-diketonates such as acetylacetonate, orthoformylphenolates, 2-pyridylcarboxylates, aminoacetates, 3-aminopropionates, 2-aminophenolates etc.

It has been surprisingly found by the present applicant that complexes containing bidentate anionic ligands of formula (V) not only manifest high catalytic activity but also enable polyesters of particularly high molecular weight to be obtained, all other conditions being equal.

Processes for preparing thermoplastic polyesters catalyzed by bidentate anionic ligands of formula (V) are particularly preferred for the purposes of the present invention.

Finally, the present invention comprises within its scope the use of those catalysts consisting of di- and polynuclear compounds of the aforedefined lanthanides, which pertain to the aforedescribed classes, even if not rigorously included within the preceding general formulas (III), (IV) and (V).

Compounds of the preceding formulas (III), (IV) and (V) can be prepared, in the various cases, by one of the general methods forming part of the inorganic and metallorganic chemistry of the lanthanides, on which a vast quantity of literature exists. Most of these general methods, together with numerous specific examples, are described in the various volumes of the aforestated "Gmelin Handbuch der Anorganischen Chemie, Coordination Compounds of Sc, Y, La to Lu". Other preparation methods are reported for example in "Nouveau Traite de Chemie Mineral", volume VII, Masson & C. Publisher, France (1959).

The salts or saline complexes included in one of the preceding formulas (III), (IV) and (V) can be used as catalyst either in only stage b) of the present process, especially when using non-esterified dicarboxylic acids which do not require a specific catalyst for stage a), or in both stage a) and b). In this latter case it has been found that their use is particularly convenient and preferred if esterified derivatives of the dicarboxylic acid are used in stage a).

On the basis of experiments conducted by the present applicant it has also been surprisingly found that the catalytic activity is particularly high when organic salts of lutetium, of general formula (IV) or (V) are used.

The catalysts for the process of the present invention are generally used in a quantity of between 0.01 and 2 wt% on the dicarboxylic acid quantity. They are preferably added to the reaction mixture in a quantity of between 0.05 and 0.5wt%. In these concentrations they manifest high catalytic activity, comparable to and frequently greater than that of catalysts of the known art.

The process of the present invention can be conducted under those conditions generally used for preparing aromatic thermoplastic polyesters of the known art. These conditions can vary according to the monomers initially used and the dimensions and type of apparatus employed and also the degree of polymerization required, but are not to be considered critical for the purposes of the present invention.

Generally stage a) is conducted at a temperature of between 150 and 220°C under slow agitation, progressively distilling off the water or alcohol which forms in the reaction. Stage b) is generally conducted at a temperature of between 190 and 300°C, preferably between 240 and 280°C, at a pressure of between 10 and 1000 Pascals.

In a typical process conducted in accordance with the present invention, the dimethyl ester of an aromatic dicarboxylic acid such as dimethylterephthalate or dimethylisophthalate or a mixture of the two is mixed with a 2/1 molar excess of a diol such as ethyleneglycol or tetramethyleneglycol. A suitable quantity (5-20 wt% on the acid dimethylester) of polyethyleneglycol or other high molecular weight glycols may be added to the mixture to improve the impact strength of the final polyester.

A suitable quantity of catalyst in the form of a soluble gadolinium or erbium complex, of generally between 0.1 and 0.3 wt% on the dimethylester, is then added to the monomer mixture. The mixture temperature is then raised to about 180-200°C, distilling off the methanol which forms during the course of the reaction between the diol and the carboxylic acid dimethylester.

When methanol is no longer evolved the temperature is further raised to 220-230°C and the pressure progressively reduced to about 30-50 Pascals. The excess glycol which develops during the transesterification reaction begins to distil off. The temperature is then gradually raised to a maximum value of about 280-290°C and the pressure further reduced to 10-20 Pascals.

During the excess glycol distillation the reaction mixture increases in molecular weight and viscosity until a molten mass of polyester is obtained when all the excess glycol has been removed.

The molten polyester is then drawn or extruded to obtain fibre or granules.

The thermoplastic aromatic polyesters obtained by the process of the present invention are polymers possessing high resistance to degradation in the molten state and consisting essentially of one or more structural units having the following general formula (VI): 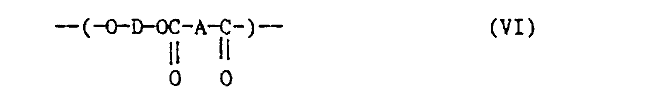 in which D and A represent respectively a divalent organic radical deriving from a diol, and an organic residue deriving from an aromatic dicarboxylic acid. These polyesters also generally contain traces of the metals of the group of previously mentioned lanthanides deriving from the catalyst used in their preparation according to the present invention, which cannot be separated but remains dispersed within the polyester mass.

They can be crystalline thermoplastic polymers such as PET or polybutylene-terephthalate, or amorphous such as amorphous PET or copolyesters containing terephthalic and isophthalic units. These polyesters generally have a molecular weight of between 5000 and 100,000, and preferably between 15,000 and 50,000.

In particular, the PET obtained by the present process has an intrinsic viscosity, measured in a 40/60 w/w phenol/ tetrachloroethane solution, at least greater than 0.3 dl/g and generally between 0.5 and 1 dl/g. Preferred PET intrinsic viscosity values are between 0.6 and 0.9 dl/g.

The process of the present invention is not limited to the preparation of aromatic polyesters containing only units deriving from dicarboxylic aromatic acids and diols, but can also be used with the same advantages to obtain copolymers containing said units plus a lesser quantity of other units co-condensable with them, and generally between 0 and 15 mol%. These units can derive for example from diamines such as hexamethylenediamine, diphenylenediamine or polyoxyethylene-diamine, or hydroxyamines such as hydroxyethylamine, in which case co-polyesteramides are obtained by the present process.

Other co-condensable units include hydroxycarboxylic or aminocarboxylic acids, preferably aromatic, such as 4-hydroxybenzoic and 4-aminobenzoic acids and the corresponding methylesters.

The thermoplastic polyesters prepared by the process of the present invention can also contain other additives such as nucleants, stabilizers, antiflame agents, fluidifiers, antioxidants, pigments, mineral fillers and fibrous reinforcements. These additives are generally known to the expert operating in the conversion of polyesters to finished products, and serve to give the polymer particular properties required for the optimum use of the finished product.

For example, nucleants suitable for PET include many carboxylic acid sodium salts; stabilizers and antioxidants include many hydroquinones and phenols of high steric hindrance. Mineral fillers for increasing the rigidity of thermoplastic polyesters are usually inert salts such as mica, kaolin, calcium sulphate, titanium oxide, talc, glass beads, aluminium sulphate, whiskers and the like.

Fibrous reinforcements usable in the polyesters prepared by the process of the present invention, and particularly in polyethyleneterephthalate, include glass fibres in the different commercially available sizes, rock wool, metal fibres and carbon fibres.

A particular class of additives for the polyesters prepared by the process of the present invention are the polymeric tougheners. These are polymers having a glass transition temperature less than 0°C, and can be linear block elastomers or polyolefins, or grafted or crosslinked copolymers.

These are added to the polyester by mixing in the molten state, preferably in an extruder, to form a phase dispersed in the polyester.

Examples of such polymeric tougheners are polybutadiene, butadiene-styrene copolymers, butadiene-acrylonitrile, ethylenepropylene rubbers, polyisobutene, polypropylene, polyethylene, ethylene-propylene-nonconjugated diene terpolymers (EPDM), polybutylacrylate and the other elastomeric acrylic copolymers, ethylene-acrylic acid copolymers, etc. Other examples of tougheners suitable for the polyesters prepared by the process of the present invention are graft copolymers consisting of a linear matrix formed from one of the aforesaid polymers or copolymers on which blocks are grafted deriving from the polymerization of polar or polarizable unsaturated compounds such as acrylic or methacrylic esters of saturated aliphatic alcohols, vinyl acetate, acrylonitrile, styrene and substituted styrenes.

Said polymer additives can be added to the polyesters prepared by the process of the present invention in a quantity of up to 30 wt% on the polyester, and preferably between 10 and 25 wt%.

The thermoplastic aromatic polyesters prepared by the process of the present invention are polymers with an excellent combination of chemical, thermal, mechanical and rheological properties. In particular, besides retaining the excellent mechanical properties of polyesters of the known art, they show a surprising resistance to thermal degradation, this being one of the greatest drawbacks in the working of polymers in the molten state and in the recycling of scrap. This reduced polyester degradation results in a greater average molecular weight stability and lesser yellowing, with a consequent better mechanical performance and a better appearance.

The thermoplastic polyesters obtained by the process of the present invention can be used with advantageous results in all the usual applications and technologies typical of polyesters. They can be extruded and adapted to the different conversion technologies, such as blow moulding, injection moulding, spinning, thermoforming etc.

In particular, the PET obtained by the present process can be used for manufacturing numerous articles such as containers, bottles, sheets, fibre-reinforced sheets, moulded articles, fibres etc.

In order to better understand and implement the present invention, some illustrative examples are given hereinafter but are in no way to be considered as limitative thereof.

Except in those cases where their preparation is specifically described, the substances used in the examples are commercially available products.

### EXAMPLE 1 (comparative)

### a) Preparation of samarium tris(o-formylphenolate)

About 500 ml of an aqueous solution containing 8.5 g of o-formylphenol (0.07 moles) are added to a solution of 3 g of samarium trichloride (11.7 mmoles) in 500 ml of water. The mixture pH is adjusted to between 6 and 7 by adding concentrated aqueous KOH, and the system is maintained under agitation for 8 hours. The precipitate thus formed is filtered off, washed with water and dried at 60°C under vacuum. The product obtained in this manner consists of samarium tris(o-formylphenolate) in a practically quantitative yield on the samarium.

### b) Preparation of polyethyleneterephthalate

305 g of dimethylterephthalate (DMT, 1.572 moles) and 221 g of ethyleneglycol (3.565 moles) in the presence of 0.506 g of samarium tris(o-formylphenolate) (9.9x10⁻⁴ moles) are loaded into a 1.8 litre cylindrical reactor equipped with a bladed stirrer and a motor able to measure the viscosity of the molten mass. The system is heated to 195°C at atmospheric pressure and maintained at this temperature for 60 minutes, continuously distilling off the methanol produced.

The pressure is then reduced to 0.3 mbar for 20 minutes and the reaction temperature is increased to 268-270°C and maintained under these conditions for 2.5 hours. The polyester obtained is discharged from the reactor, cooled rapidly in water and dried in an oven for 10 h at 100°C under 0.3 mbar.

The intrinsic viscosity of the polyester obtained in this manner, measured within the range 0.3-1 g/dl at 25°C in a tetrachloroethane/phenol (60/40 weight) mixture is 0.823 dl/g, corresponding to a number-average molecular weight of 24100.

The thermal stability of the PET obtained was evaluated by a degradation test in a sealed ampule. For this purpose, a glass ampule is loaded under a nitrogen atmosphere with 0.3 g of polymer, sealed and placed for 1 hour in a thermoblock heated to 270°C. After this treatment the polyester had an intrinsic viscosity of 0.622 dl/g, corresponding to a number-average molecular weight of 18300.

### EXAMPLE 2 (comparative)

305 g of DIET (1.572 moles) and 221 g of ethyleneglycol (3.565 moles) in the presence of 0.337 g of titanium tetrabutylate (9.9x10⁻⁴ moles) are loaded into a 1.8 litre cylindrical reactor equipped with a bladed stirrer and a motor able to measure the viscosity of the molten mass.

The system is heated to 195°C at atmospheric pressure and maintained at this temperature for 90 minutes, continuously distilling off the methanol produced. The pressure is then reduced to 0.3 mbar for 20 minutes and the reaction temperature is increased to 268-270°C and maintained under these conditions for 2.5 hours. The polyester obtained is cooled by immersion in water and dried in an oven for 10 h at 100°C.

The intrinsic viscosity of the polyester obtained in this manner, measured within the range 0.3-1 g/100 ml, at 25°C in a tetrachloroethane/phenol (60/40 weight) mixture is 0.898 dl/g, corresponding to a number-average molecular weight of 26800 0.3 g of this polyester are then treated as in Example 1 to evaluate its thermal degradation. On termination of the test, the intrinsic viscosity of the polyester had fallen to 0.302 dl/g, corresponding to a molecular weight of 9100. A PET with such a molecular weight is a very fragile material unusable for industrial purposes.

### EXAMPLE 3 (comparative)

### a) preparation of europium acetylacetonate dipyridyl [Eu(AcAc)₃(2,2'-dipy)]

About 300 ml of an aqueous solution containing 7 g of acetylacetone (0.07 mmoles) are added to a solution of 3 g of europium trichloride (11.6 mmoles) in 500 ml of water. The mixture pH is adjusted to between 6 and 7 by adding concentrated aqueous KOH, and the system is maintained under agitation for 8 hours. The precipitate thus formed is filtered off, washed with water and dried at 60°C under vacuum for 14 hours. The solid, consisting of europium acetylacetonate, is then dissolved in ethanol and a solution containing 3.7 g of 2,2'-dipyridyl in ethanol added thereto. The mixture is maintained under agitation for about one hour. The precipitate formed is filtered off, washed with ethanol and dried in an oven, it consisting of Eu(AcAc)₃(2,2'-dipy) in a practically quantitative yield on the initial europium.

### b) Preparation of polyethyleneterephthalate

305 g of DMT (1.572 moles) and 221 g of ethyleneglycol (3.565 moles) in the presence of 0.601 g of Eu(AcAc)₃(2,2'-dipy) (9.9x10⁻⁴ moles) are loaded into a 1.8 litre cylindrical reactor equipped with a bladed stirrer and a motor able to measure the viscosity of the molten mass. The system is heated to 195°C at atmospheric pressure and maintained at this temperature for 60 minutes, continuously distilling off the methanol produced.

The pressure is then reduced to 0.3 mbar for 20 minutes and the reaction temperature is increased to 268-270°C and maintained under these conditions for 2.5 hours.

The polyester obtained is treated and characterised in the manner described in Examples 1 and 2. It has an intrinsic viscosity of 0.743 dl/g and an average molecular weight of 21300. After the thermal degradation test conducted as described in Example 1, the intrinsic viscosity of the polyester is found to be 0.583 dl/g, with a molecular weight of 16600.

### EXAMPLE 4 (comparative)

305 g of DMT (1.572 moles) and 221 g of ethyleneglycol (3.565 moles) in the presence of 0.268 g of Sb₂O₃ + 0.247 g of Ca(OOCCH₃)₂ (9.9x10⁻⁴ moles) are loaded into a 1.8 litre cylindrical reactor equipped with a bladed stirrer and a motor able to measure the viscosity of the molten mass. The system is heated to 195°C at atmospheric pressure and maintained at this temperature for 90 minutes, continuously distilling off the methanol produced. The pressure is then reduced to 0.3 mbar for 20 minutes and the reaction temperature is increased to 268-270°C and maintained under these conditions for 2.5 hours.

The polyester, extracted from the reactor and characterised in the manner described in the preceding examples, is found to have an intrinsic viscosity of 0.854 dl/g with an average molecular weight of 25200.

0.3 g of this polyester are treated as in Example 1 to evaluate its thermal degradation. On termination of the test, the intrinsic viscosity of the polyester had fallen to 0.250 dl/g, corresponding to a molecular weight of 7300.

### EXAMPLE 5 (comparative)

305 g of DMT (1.572 moles) and 221 g of ethyleneglycol (3.565 moles) in the presence of 0.431 g of Sm(OOCCH₃)₃.6H₂O (9.9x10⁻⁴ moles) are loaded into a 1.8 litre cylindrical reactor equipped with a bladed stirrer and a motor able to measure the viscosity of the molten mass. The system is heated to 195°C at atmospheric pressure and maintained at this temperature for 60 minutes, continuously distilling off the methanol produced.

The pressure is then reduced to 0.3 mbar for 20 minutes and the reaction temperature is increased to 268-270°C and maintained under these conditions for 2.5 hours.

The polyester, extracted from the reactor and characterised in the manner described in the preceding examples, is found to have an intrinsic viscosity of 0.655 dl/g with an average molecular weight of 18200.

0.3 g of this polyester are treated as in Example 1 to evaluate its thermal degradation. On termination of the test, the intrinsic viscosity of the polyester had fallen to 0.487 dl/g, corresponding to a molecular weight of 13500.

## Claims

1. A process for preparing thermoplastic aromatic polyesters possessing high resistance to degradation in the molten state, comprising:
a) reacting an aromatic dicarboxylic acid, or a derivative thereof esterified with a volatile alcohol, with an excess of a diol, while at the same time removing the water or volatile alcohol which forms during the reaction, until the dicarboxylic acid diglycolester or a mixture of oligomers thereof is obtained;
b) polycondensing the dicarboxylic acid diglycolester or the mixture of oligomers obtained in stage a) while at the same time removing the excess glycol released during the polycondensation, until the thermoplastic aromatic polyester is obtained;
wherein in stage b) or preferably in both stages a) and b) of the process a salt or a saline complex, soluble in the reacting mixture, of a metal chosen from gadolinium, erbium, thulium, ytterbium and lutetium.

2. A process as claimed in claim 1, wherein the metal is chosen from gadolinium and erbium.

3. A process as claimed in claim 1, wherein the catalyst is a salt or saline complex of the following formulas (III) or (IV): 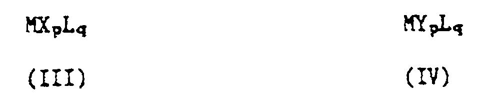 in which:
M is a metal chosen from gadolinium, erbium, thulium, ytterbium and lutetium,
X is a monovalent inorganic counter-ion,
each L is independently a neutral ligand,
each Y represents independently a monodentate organic anion,
p is the oxidation state of the metal M, which can assume the value 2 or 3 with the condition that p+q is a maximum of 8 and preferably a whole number between 2 and 6.

4. A process as claimed in claim 1, wherein the catalyst is a complex of general formula (V):
BᵢMLⱼ (V)
in which:
M is a metal chosen from gadolinium, erbium, thulium, ytterbium and lutetium,
each L is independently a neutral ligand,
B is a bidentate anionic ligand,
i is the oxidation state of the metal and can assume the value 2 or 3, with the condition that 2i + j is a whole number between 4 and 8 and preferably between 6 and 8.

5. A process as claimed in claim 3 or 4, wherein the metal M is gadolinium or erbium.

6. A process as claimed in any one of claims 3 to 5, wherein the oxidation states p or i have the value 3.

7. A process as claimed in any one of the preceding claims, wherein stage a) is conducted at a temperature of between 150 and 220°C, the water or alcohol formed during the reaction being progressively distilled off.

8. A process as claimed in any one of the preceding claims, wherein stage b) is conducted at a temperature of between 190 and 300°C, preferably between 240 and 280°C, at a pressure of between 10 and 1000 Pascals.

9. A process as claimed in any one of the preceding claims, wherein the catalyst is used in a quantity of between 0.01 and 2 wt% with respect to the quantity of aromatic dicarboxylic acid, or derivative thereof.

10. A process as claimed in claim 9, wherein the catalyst quantity is between 0.05 and 0.5 wt%.

11. A process as claimed in any one of the preceding claims, wherein the aromatic dicarboxylic acid is terephthalic acid, the glycol being ethyleneglycol.

12. A process as claimed in any one of claims 1 to 10, wherein dimethylterephthalate is reacted with ethyleneglycol in stage a).

13. Use of the salts and/or saline complexes having one of the following formulas (III), (IV) or (V): 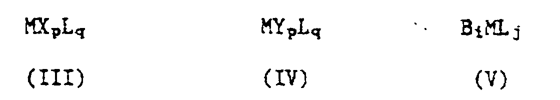 in which:
M is a metal chosen from gadolinium, erbium, thulium, ytterbium and lutetium,
X is a monovalent inorganic counter-ion,
each L is independently a neutral ligand,
each Y represents independently a monodentate organic anion,
B is a bidentate anionic ligand,
p and i are the oxidation states of the metal M, which can assume the value 2 or 3 with the condition that p+q is a maximum of 8 and preferably a whole number between 2 and 6, and that 2i + j is a whole number between 4 and 8 and preferably between 6 and 8, as catalysts in a process for preparing thermoplastic aromatic polyesters.

## Patentansprüche

1. Verfahren zur Herstellung von thermoplastischen aromatischen Polyestern mit hoher Beständigkeit gegenüber Abbau im geschmolzenen Zustand, umfassend:
a) Umsetzen einer aromatischen Dicarbonsäure oder eines Derivats derselben, verestert mit einem flüchtigen Alkohol, mit einem Überschuss eines Diols bei gleichzeitiger Entfernung des Wassers oder flüchtigen Alkohols, das bzw. der während der Reaktion gebildet wird, bis der Dicarbonsäurediglykolester oder eine Mischung von Oligomeren desselben erhalten wird;
b) Polykondensieren des Dicarbonsäurediglykolesters oder der Mischung von Oligomeren, erhalten in Stufe a), bei gleichzeitiger Entfernung des während der Polykondensation freigesetzten Glykolüberschusses bis der thermoplastische aromatische Polyester erhalten wird;
worin in Stufe b) oder vorzugsweise in beiden Stufen a) und b) des Verfahrens ein Salz oder ein Salzkomplex, löslich in dem Reaktionsgemisch, eines Metalls, ausgewählt unter Gadolinium, Erbium, Thulium, Ytterbium und Lutetium, als Katalysator verwendet wird.

2. Verfahren gemäß Anspruch 1, worin das Metall ausgewählt ist unter Gadolinium und Erbium.

3. Verfahren gemäß Anspruch 1, worin der Katalysator ein Salz oder Salzkomplex der folgenden Formeln (III) oder (IV) ist: 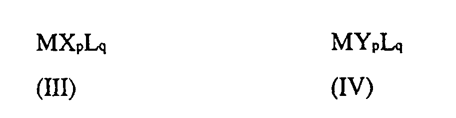 worin:
M ein Metall ist, ausgewählt unter Gadolinium, Erbium, Thulium, Ytterbium und Lutetium,
X ein monovalentes anorganisches Gegenion darstellt,
jedes L unabhängig einen neutralen Liganden darstellt,
jedes Y unabhängig ein einzähniges organisches Anion darstellt,
p der Oxidationszustand des Metalls M ist, der den Wert 2 oder 3 annehmen kann, mit der Bedingung, dass p + q maximal 8 ist und vorzugsweise eine ganze Zahl zwischen 2 und 6.

4. Verfahren gemäß Anspruch 1, worin der Katalysator ein Komplex der allgemeinen Formel (V) ist:
BᵢMLⱼ (V)
worin:
M ein Metall ist, ausgewählt unter Gadolinium, Erbium, Thulium, Ytterbium und Lutetium,
jedes L unabhängig einen neutralen Liganden darstellt,
B ein zweizähniger anionischer Ligand ist,
i der Oxidationszustand des Metalls ist und den Wert 2 oder 3 annehmen kann, mit der Bedingung, dass 2i + j eine ganze Zahl zwischen 4 und 8 und vorzugsweise zwischen 6 und 8 ist.

5. Verfahren gemäß Anspruch 3 oder 4, worin das Metall M Gadolinium oder Erbium ist.

6. Verfahren gemäß einem der Ansprüche 3 bis 5, worin die Oxidationszustände p oder i den Wert 3 haben.

7. Verfahren gemäß einem der vorstehenden Ansprüche, worin Stufe a) bei einer Temperatur von zwischen 150 und 220 °C durchgeführt wird, wobei das während der Reaktion gebildete Wasser oder der Alkohol fortschreitend abdestilliert werden.

8. Verfahren gemäß einem der vorstehenden Ansprüche, worin Stufe b) bei einer Temperatur von zwischen 190 und 300 °C, vorzugsweise zwischen 240 und 280 °C bei einem Druck von zwischen 10 und 1000 Pascal durchgeführt wird.

9. Verfahren gemäß einem der vorstehenden Ansprüche, worin der Katalysator in einer Menge von zwischen 0,01 und 2 Gew.-% eingesetzt wird, bezogen auf die Menge der aromatischen Dicarbonsäure oder deren Derivat.

10. Verfahren gemäß Anspruch 9, worin die Katalysatormenge zwischen 0,05 und 0,5 Gew.-% liegt.

11. Verfahren gemäß einem der vorstehenden Ansprüche, worin die aromatische Dicarbonsäure Terephthalsäure ist und das Glykol Ethylenglykol ist.

12. Verfahren gemäß einem der Ansprüche 1 bis 10, worin Dimethylterephthalat in Stufe a) mit Ethylenglykol umgesetzt wird.

13. Verwendung von Salzen und/oder Salzkomplexen mit einer der folgenden Formeln (III), (IV) oder (V): 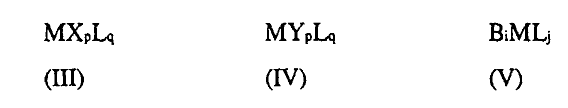 worin:
M ein Metall ist, ausgewählt unter Gadolinium, Erbium, Thulium, Ytterbium und Lutetium,
X ein monovalentes anorganisches Gegenion ist,
jedes L unabhängig einen neutralen Liganden darstellt,
jedes Y unabhängig ein einzähniges organisches Anion darstellt,
B ein zweizähniger anionischer Ligand ist,
p und i die Oxidationszustände des Metalls M sind, die den Wert 2 oder 3 annehmen können, mit der Bedingung, dass p + q maximal 8 und vorzugsweise eine ganze Zahl zwischen 2 und 6 ist und dass 2i + j eine ganze Zahl zwischen 4 und 8 und vorzugsweise zwischen 6 und 8 ist,
als Katalysator in einem Verfahren zur Herstellung thermoplastischer aromatischer Polyester.

## Revendications

1. Procédé pour préparer des polyesters aromatiques thermoplastiques possédant une grande résistance à la dégradation à l'état fondu, comprenant :
a) la réaction d'un acide dicarboxylique aromatique, ou d'un dérivé de celui-ci estérifié avec un alcool volatil, avec un excès d'un diol, tout en retirant en même temps l'eau ou l'alcool volatil qui se forme pendant la réaction, jusqu'à ce que le diglycolester d'acide dicarboxylique ou un mélange d'oligomères de celui-ci soit obtenu ;
b) la polycondensation du diglycolester d'acide dicarboxylique ou du mélange d'oligomères obtenu dans l'étape a) tout en retirant en même temps le glycol en excès libéré pendant la polycondensation, jusqu'à ce que le polyester aromatique thermoplastique soit obtenu ;
où, dans l'étape b) ou de préférence dans les deux étapes a) et b) du procédé, un sel ou un complexe salin, soluble dans le mélange réactionnel, d'un métal choisi parmi le gadolinium, l'erbium, le thulium, l'ytterbium et le lutétium est utilisé comme catalyseur.

2. Procédé selon la revendication 1 où le métal est choisi parmi le gadolinium et l'erbium.

3. Procédé selon la revendication 1 où le catalyseur est un sel ou complexe salin des formules (III) ou (IV) suivantes 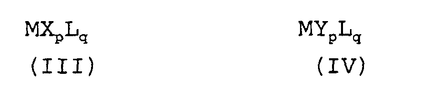 où :
M est un métal choisi parmi le gadolinium, l'erbium, le thulium, l'ytterbium et le lutétium,
X est un contre-ion inorganique monovalent,
chaque L est indépendamment un ligand neutre,
chaque Y représente indépendamment un anion organique monodenté,
p est le nombre d'oxydation du métal M, qui peut prendre la valeur 2 ou 3 à condition que p+q soit un maximum de 8 et de préférence un nombre entier situé entre 2 et 6.

4. Procédé selon la revendication 1 où le catalyseur est un complexe de formule générale (V) :
BᵢMLⱼ (V)
où :
M est un métal choisi parmi le gadolinium, l'erbium, le thulium, l'ytterbium et le lutétium,
chaque L est indépendamment un ligand neutre,
B est un ligand anionique bidenté,
i est le nombre d'oxydation du métal et peut prendre la valeur 2 ou 3, à condition que 2i + j soit un nombre entier situé entre 4 et 8 et de préférence entre 6 et 8.

5. Procédé selon la revendication 3 ou 4 où le métal M est le gadolinium ou l'erbium.

6. Procédé selon l'une quelconque des revendications 3 à 5 où les nombres d'oxydation p ou i ont la valeur 3.

7. Procédé selon l'une quelconque des revendications précédentes où l'étape a) est réalisée à une température située entre 150 et 220°C, l'eau, ou l'alcool, formée pendant la réaction étant progressivement éliminée par distillation.

8. Procédé selon l'une quelconque des revendications précédentes où l'étape b) est réalisée à une température située entre 190 et 300°C, de préférence entre 240 et 280°C, à une pression située entre 10 et 1000 pascals.

9. Procédé selon l'une quelconque des revendications précédentes où le catalyseur est utilisé en une quantité située entre 0,01 et 2 % en masse par rapport à la quantité d'acide dicarboxylique aromatique ou de dérivé de celui-ci.

10. Procédé selon la revendication 9 où la quantité de catalyseur est située entre 0,05 et 0,5 % en masse.

11. Procédé selon l'une quelconque des revendications précédentes où l'acide dicarboxylique aromatique est l'acide téréphtalique, le glycol étant l'éthylèneglycol.

12. Procédé selon l'une quelconque des revendications 1 à 10 où le téréphtalate de diméthyle est mis à réagir avec l'éthylèneglycol dans l'étape a).

13. Utilisation des sels et/ou complexes salins ayant l'une des formules (III), (IV) et (V) suivantes : 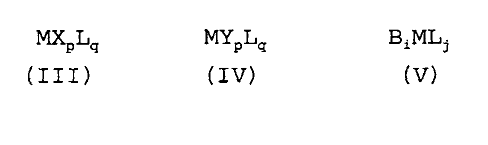 où :
M est un métal choisi parmi le gadolinium, l'erbium, le thulium, l'ytterbium et le lutétium,
X est un contre-ion inorganique monovalent,
chaque L est indépendamment un ligand neutre,
chaque Y représente indépendamment un anion organique monodenté,
B est un ligand anionique bidenté,
p et i sont les nombres d'oxydation du métal M, qui peuvent prendre la valeur 2 ou 3 à condition que p+q soit un maximum de 8 et de préférence un nombre entier situé entre 2 et 6, et que 2i + j soit un nombre entier situé entre 4 et 8 et de préférence entre 6 et 8, comme catalyseurs dans un procédé pour préparer des polyesters aromatiques thermoplastiques.
